# FASCICULE DE BREVET EUROPEEN

(11) **EP 0 670 241 B1**
(45) Date de publication et mention de la délivrance du brevet: **29.04.1998**
(21) Numéro de dépôt: 95400415.6
(22) Date de dépôt: 27.02.1995
(51) Int. Cl.: B60N 2/46

(54) **Sièges équipés d'accoudoirs rabattables**
Sitz mit umklappbarer Armlehne
Seat with tiltable armrest

(30) Priorité: 02.03.1994 FR 9402400
(43) Date de publication de la demande: 06.09.1995
(73) Titulaire: BERTRAND FAURE EQUIPEMENTS S.A., F-92100 Boulogne (FR)
(72) Inventeur: Bernard, Vincent Frédéric Georges, F-88110 Raon L'Etape (FR)
(74) Mandataire: Burbaud, Eric

(56) Documents cités:
- EP-A- 0 018 662
- EP-A- 0 258 194
- DE-A- 2 935 946
- DE-A- 3 436 509
- FR-A- 2 318 758
- GB-A- 2 194 305
- US-A- 1 896 477
- PATENT ABSTRACTS OF JAPAN vol. 14 no. 96 (C-0692) ,22 Février 1990 & JP-A-01 305906 (MASAO KUBOTA)
- PATENT ABSTRACTS OF JAPAN vol. 12 no. 251 (M-718) ,15 Juillet 1988 & JP-A-63 038046 (MAZDA MOTOR CORP.)

## Description

La présente invention concerne les sièges équipés d'accoudoirs rabattables.

Plus particulièrement, l'invention est relative à un siège comportant une assise, une dossier et un accoudoir monté pivotant entre une position relevée et une position rabattue, l'accoudoir étant intégré dans le dossier et constituant une partie dudit dossier lorsqu'il est dans sa position relevée, et l'accoudoir étant disposé sensiblement horizontalement en appui sur l'assise lorsqu'il est dans sa position rabattue.

Le document EP-A-0 258 194 décrit un exemple de siège de ce type.

En général, l'accoudoir de ce type de siège est réalisé sous la forme d'un bloc de mousse recouvert d'un revêtement et présentant une épaisseur égale à l'épaisseur de la matelassure du dossier pour pouvoir s'intégrer dans le dossier lorsqu'il est en position relevée.

D'autre part, l'accoudoir s'appuie habituellement sur l'assise du siège lorsqu'il est rabattu.

Compte tenu de l'épaisseur assez faible de la matelassure du dossier, donc de la relativement faible épaisseur de l'accoudoir, celui-ci est relativement bas lorsqu'il est rabattu, de sorte qu'il ne fournit pas un appui confortable pour les coudes des passagers.

De plus, chaque passager est généralement assis entre l'accoudoir rabattable et un accoudoir de porte, ce dernier accoudoir étant généralement plus haut que l'accoudoir rabattable, ce qui accroit encore l'inconfort du passager.

Pour remédier à ces inconvénients, il est connu de monter l'accoudoir sur l'armature du siège au moyen d'un mécanisme à biellette qui relève l'accoudoir lorsqu'il est rabattu. L'accoudoir se trouve ainsi monté en console sur l'armature du siège, de sorte qu'il ne s'appuie plus sur l'assise du siège lorsqu'il est rabattu.

Toutefois, ce montage est complexe et coûteux, d'autant plus que l'embiellage doit être particulièrement résistant pour supporter les couples importants qui peuvent être engendrés par l'appui du coude ou de l'avant-bras d'un passager vers l'extrémité libre de l'accoudoir.

Par ailleurs, le document DE-A-29 35 946 décrit un siège doté d'un accoudoir qui est réglable en hauteur mais qui ne peut pas s' intégrer dans le dossier du siège, et le document GB-2 194 305 décrit un accoudoir qui est réglable en hauteur, mais qui n'est pas pivotant entre une position relevée où il s'intégrerait dans le dossier d'un siège et une position rabattue où il s'appuierait sur l'assise d'un siège.

La présente invention a pour but de réaliser un siège comportant un accoudoir rabattable qui pivote entre une position où il s'intègre dans le dossier et une position rabattue où il s'appuie sur l'assise, qui soit simple, résistant et peu coûteux et qui, lorsqu'il est rabattu, puisse être positionné à une hauteur confortable pour un utilisateur du véhicule.

A cet effet, selon l'invention, un siège du genre en question est essentiellement caractérisé en ce que l'accoudoir comporte un premier et un deuxième bras, et un mécanisme de rehausse qui est commandé par le pivotement de l'accoudoir et qui est adapté pour :
- écarter les deux bras l'un de l'autre en rehaussant le deuxième bras par rapport au premier lorsque l'accoudoir est en position rabattue, le premier bras formant alors la partie inférieure de l'accoudoir et étant en appui sur l'assise, et le deuxième bras formant alors la partie supérieure de l'accoudoir,
- et rapprocher les deux bras l'un de l'autre en diminuant ainsi l'épaisseur de l'accoudoir lorsque l'accoudoir est en position relevée.

Ainsi, l'accoudoir présente une faible épaisseur lorsqu'il est relevé, de sorte qu'il peut s'intègrer parfaitement dans l'épaisseur de la matelassure du dossier du siège, et il a une épaisseur plus grande lorsqu'il est rabattu, de sorte qu'il peut fournir un appui à une hauteur confortable pour le coude d'un passager du véhicule tout en s'appuyant lui-même sur l'assise du siège.

Dans des modes de réalisation préférés de l'invention, on a recours en outre à l'une et/ou à l'autre des dispositions suivantes :
- les premier et deuxième bras s'étendent chacun longitudinalement entre une extrémité dite arrière et une extrémité dite avant, chacun des bras présentant une armature rigide, l'armature du premier bras comportant un premier axe de rotation qui est situé vers l'extrémité arrière du premier bras et qui est monté dans une position fixe par rapport au reste du siège, l'armature du premier bras étant en outre connectée à au moins une bielle rigide qui est montée pivotante autour d'un deuxième axe solidaire de ladite armature du premier bras, la bielle étant en outre montée pivotante autour d'un troisième axe solidaire de l'armature du deuxième bras, et l'armature du deuxième bras comportant également un quatrième axe de rotation qui est situé vers l'extrémité arrière du deuxième bras et qui est monté dans une position fixe par rapport au reste du siège, les quatre axes étant horizontaux et parallèles entre eux et étant disposés à distance les uns des autres, ces axes ainsi que la bielle constituant le mécanisme de rehausse ;
- les troisième et quatrième axes sont séparés par une distance supérieure à la moitié de la longueur du deuxième bras ;
- le troisième axe est disposé au voisinage de l'extrémité avant du deuxième bras ;
- les premier, deuxième, troisième et quatrième axes forment chacun un sommet d'un quadrilatère qui définit un premier angle au sommet correspondant au premier axe et un troisième angle au sommet correspondant au troisième axe, ces premier et troisième angles au sommet étant chacun compris entre 50 et 130 degrés lorsque l'accoudoir est en position rabattue et inférieur à 40 degrés lorsque l'accoudoir est en position relevée ;
- les premier et troisième angles au sommet sont chacun compris entre 70 et 110 degrés lorsque l'accoudoir est en position rabattue et inférieur à 20 degrés lorsque l'accoudoir est en position relevée ;
- le quadrilatère formé par les quatre axes a sensiblement la forme d'un parallélogramme ;
- le premier bras comporte une face qui est dirigée vers le haut lorsque l'accoudoir est en position rabattue, et un logement qui débouche par une ouverture dans cette face, ce logement et son ouverture étant conformés pour recevoir par emboîtement le deuxième bras lorsque l'accoudoir est en position relevée ;
- le deuxième bras ne sort pas complètement du logement lorsque l'accoudoir est en position rabattue, et ledit deuxième bras occupe alors sensiblement toute l'ouverture par laquelle débouche le logement ;
- le deuxième bras délimite intérieurement une boîte de rangement qui débouche par une ouverture ménagée à l'extrémité avant dudit deuxième bras ;
- un tiroir est monté coulissant dans ladite boîte de rangement.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en coupe verticale d'un siège selon un mode de réalisation de l'invention, avec son accoudoir rabattu,
- la figure 2 est une vue schématique représentant le quadrilatère défini par les deux axes de rotation des deux bras de l'accoudoir de la figure 1 et par les deux axes de rotation de la bielle qui relie ces deux bras, ce quadrilatère étant représenté dans la position rabattue de l'accoudoir,
- la figure 3 est une vue similaire à la figure 1, lorsque l'accoudoir est en position relevée, et
- la figure 4 est une vue en perspective partiellement écorchée du dispositif de la figure 1.

Sur les différentes figures, les mêmes références désignent des éléments identiques ou similaires.

Le siège de véhicule représenté sur les figures est un siège arrière de véhicule automobile comportant une assise 1, un dossier 2, et un accoudoir 3 central monté pivotant entre une position relevée où il s'intègre dans le dossier et constitue une partie dudit dossier, et une position rabattue où il est disposé sensiblement horizontalement en s'appuyant sur l'assise.

L'accoudoir comporte un premier bras 4 qui s'étend longitudinalement entre une extrémité dite arrière 4₁ et une extrémité dite avant 4₂. Ce premier bras comporte une armature rigide 4₃ pouvant être réalisée par exemple par moulage en matière plastique. L'armature 4₃ est montée pivotante autour d'un premier axe A, horizontal et fixe par rapport au siège, qui est situé vers l'extrémité arrière 4₁ du premier bras.

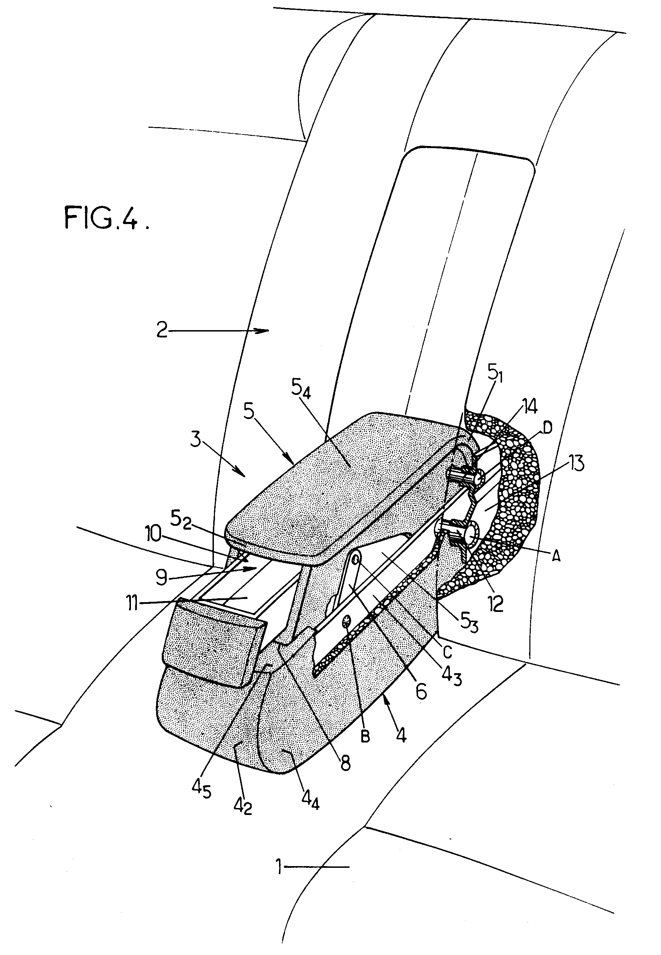

Dans l'exemple représenté sur la figure 4, l'axe A est matérialisé par un pivot 12 faisant partie de l'armature 4₃, qui tourillonne dans un support 13 solidaire de l'armature du siège.

L'armature 4₃ est recouverte d'une matelassure 4₄, au moins sur la face avant du premier bras 4, ainsi que sur ses faces latérales et sa face qui est dirigée vers le bas lorsque l'accoudoir est rabattu.

En outre, le premier bras 4 comporte une face 4₅ qui est dirigée vers le haut lorsque l'accoudoir est en position rabattue, cette face 4₅ comportant une ouverture 8 qui s'étend depuis le voisinage de l'extrémité avant 4₂ du premier bras jusqu'à l'extrémité arrière 4₁ dudit premier bras. Cette ouverture 8 communique avec un logement 7 qui est creusé à l'intérieur du premier bras et dont l'utilité sera vue plus loin.

D'autre part, l'accoudoir comporte un deuxième bras 5 qui, comme le premier bras, s'étend entre une extrémité arrière 5₁ et une extrémité avant 5₂, et qui comporte une armature 5₃ rigide pouvant être réalisée par exemple par moulage en matière plastique.

Par ailleurs, le deuxième bras 5 comporte une matelassure 5₄ au moins sur sa face qui est dirigée vers le haut lorsque l'accoudoir est en position rabattue.

L'armature 5₃ est montée pivotante autour d'un axe D dit ci-après quatrième axe, qui est parallèle au premier axe A. L'axe D est situé vers l'extrémité arrière 5₁ du deuxième bras, et il est fixe par rapport au siège. Dans l'exemple de la figure 4, le quatrième axe D est matérialisé par un pivot 14 appartenant à l'armature 5₃, qui tourillonne dans le support 13 susmentionné.

Par ailleurs, deux bielles 6 rigides, généralement métalliques, dont une seule est visible sur les dessins, relient les armatures 4₃ et 5₃ des deux bras. Chaque bielle 6 est montée pivotante sur un axe B dit deuxième axe, qui est parallèle aux axes A et D susmentionnés et solidaire de l'armature 4₃ du premier bras. En outre, chaque bielle 6 est montée également pivotante sur un axe C, dit troisième axe, qui est parallèle aux trois axes susmentionnés A, B, D, et qui est solidaire de l'armature 5₃ du deuxième bras. Dans l'exemple représenté sur la figure 4, chaque bielle 6 est disposée à l'intérieur du logement 7, et est montée pivotante sur une face latérale du deuxième bras 5.

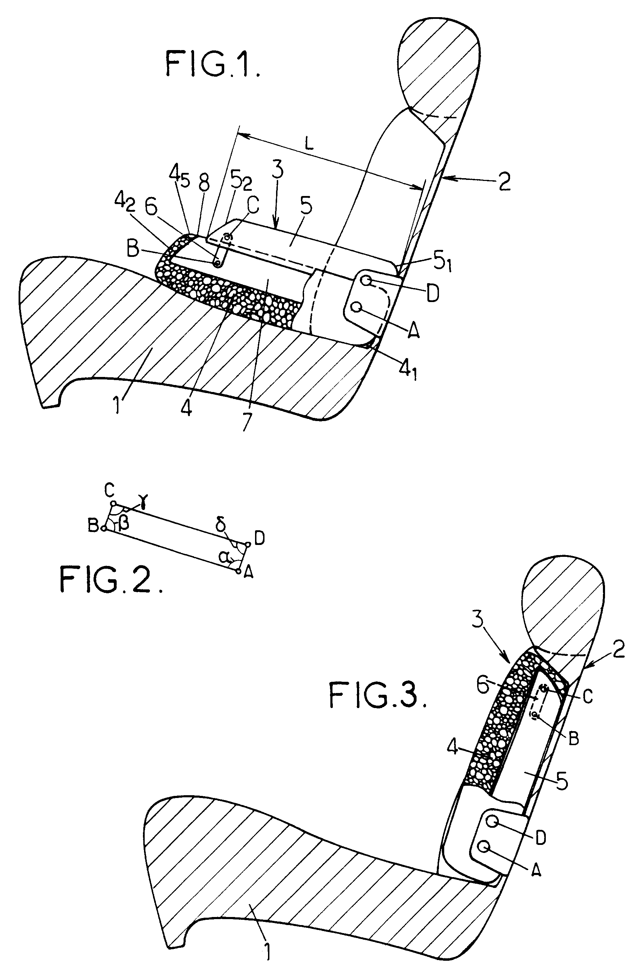

Les quatre axes A, B, C, D, forment les sommets d'un quadrilatère qui dans l'exemple représenté est un parallélogramme. Les angles au sommet correspondant respectivement aux axes A, B, C, D seront appelés α, β, γ, δ, comme représenté sur la figure 2.

Lorsque l'accoudoir est en position rabattue, comme représenté sur les figures 1 et 4, les angles α et γ sont de préférence proches de 90 degrés, de sorte que les deux bras 4 et 5 sont écartés l'un de l'autre, ce qui signifie que l'épaisseur de l'accoudoir est grande. Le deuxième bras 5, sur lequel s'appuie le coude d'un passager, est donc relativement haut.

Plus précisément, dans cette position rabattue, chacun des angles α et γ doit être compris strictement entre 45 et 135 degrés, ces angles limites correspondant à un accoudoir ayant la même épaisseur en position rabattue et en position relevée. En pratique, chacun des angles α et γ sera compris entre 50 et 130 degrés, de préférence entre 60 et 120 degrés, et de façon encore plus préférée entre 70 et 110 degrés.

Dans cette position rabattue, le deuxième bras 5 est partiellement engagé dans le logement 7 en obturant sensiblement toute l'ouverture 8 formée dans la face supérieure du premier bras 4, de sorte que le logement 7 n'est pas visible et que des corps étrangers ne peuvent pas pénétrer dans ce logement.

Lorsque l'accoudoir est relevé, comme représenté sur la figure 3, les angles α et γ deviennent très faibles, de sorte que les deux bras 4 et 5 sont rapprochés l'un de l'autre. Au cours du mouvement de relèvement de l'accoudoir, le deuxième bras 5 s'engage par emboîtement dans le logement 7 au travers de l'ouverture 8, de sorte que l'épaisseur de l'accoudoir est réduite, ce qui permet audit accoudoir de se loger dans l'épaisseur de la matelassure du dossier du siège.

Dans cette position relevée, chacun des angles α et γ doit être inférieur à 45 degrés, et sera en pratique inférieur à 40 degrés (pour α et γ compris entre 50 et 130 degrés en position rabattue), de préférence inférieur à 30 degrés (pour α et γ compris entre 60 et 120 degrés en position rabattue) et de façon encore plus préférée inférieur à 20 degrés (pour α et γ compris entre 70 et 110 degrés en position rabattue).

A titre de perfectionnement non indispensable, le deuxième bras 5 peut comporter une boîte de rangement 9, qui débouche à l'extrémité avant dudit deuxième bras par une ouverture 10. L'ouverture 10 est dégagée lorsque l'accoudoir est en position rabattue, et obturée lorsque l'accoudoir est en position relevée.

Eventuellement, un tiroir 11 peut être monté coulissant dans la boîte de rangement 9, de façon à permettre à un utilisateur d'accéder facilement aux objets rangés dans ladite boîte, d'autant plus que lesdits objets ont tendance à glisser vers le fond de ladite boîte lorsque l'accoudoir est relevé.

## Revendications

1. Siège comportant une assise (1), une dossier (2) et un accoudoir (3) monté pivotant entre une position relevée et une position rabattue, l'accoudoir (3) étant intégré dans le dossier (2) et constituant une partie dudit dossier lorsqu'il est dans sa position relevée, et l'accoudoir (3) étant disposé sensiblement horizontalement en appui sur l'assise (2) lorsqu'il est dans sa position rabattue, caractérisé en ce que l'accoudoir comporte un premier et un deuxième bras (4, 5), et un mécanisme de rehausse (A-D, 6) qui est commandé par le pivotement de l'accoudoir et qui est adapté pour :
- écarter les deux bras (4, 5) l'un de l'autre en rehaussant le deuxième bras (5) par rapport au premier (4) lorsque l'accoudoir est en position rabattue, le premier bras (4) formant alors la partie inférieure de l'accoudoir et étant en appui sur l'assise, et le deuxième bras (5) formant alors la partie supérieure de l'accoudoir,
- et rapprocher les deux bras l'un de l'autre en diminuant ainsi l'épaisseur de l'accoudoir lorsque l'accoudoir est en position relevée.

2. Siège selon la revendication 1, dans lequel les premier et deuxième bras (4, 5) s'étendent chacun longitudinalement entre une extrémité dite arrière (4₁, 5₁) et une extrémité dite avant (4₂, 5₂), chacun des bras présentant une armature rigide (4₃, 5₃), l'armature (4₃) du premier bras (4) comportant un premier axe de rotation (A) qui est situé vers l'extrémité arrière (4₁) du premier bras et qui est monté dans une position fixe par rapport au reste du siège, l'armature (4₃) du premier bras étant en outre connectée à au moins une bielle (6) rigide qui est montée pivotante autour d'un deuxième axe (B) solidaire de ladite armature du premier bras, la bielle (6) étant en outre montée pivotante autour d'un troisième axe (C) solidaire de l'armature (5)) du deuxième bras, et l'armature (5₃) du deuxième bras comportant également un quatrième axe de rotation (D) qui est situé vers l'extrémité arrière (5₁) du deuxième bras et qui est monté dans une position fixe par rapport au reste du siège, les quatre axes (A-D) étant horizontaux et parallèles entre eux et étant disposés à distance les uns des autres, ces axes (A-D) ainsi que la bielle (6) constituant le mécanisme de rehausse.

3. Siège selon la revendication 2, dans lequel les troisième et quatrième axes (C, D) sont séparés par une distance supérieure à la moitié de la longueur (L) du deuxième bras (5).

4. Siège selon la revendication 3, dans lequel le troisième axe (C) est disposé au voisinage de l'extrémité avant (5₂) du deuxième bras.

5. Siège selon l'une quelconque des revendications 2 à 4, dans lequel les premier, deuxième, troisième et quatrième axes (A-D) forment chacun un sommet d'un quadrilatère qui définit un premier angle au sommet (α) correspondant au premier axe (A) et un troisième angle au sommet (γ) correspondant au troisième axe (C), ces premier et troisième angles au sommet (α, γ) étant chacun compris entre 50 et 130 degrés lorsque l'accoudoir est en position rabattue et inférieur à 40 degrés lorsque l'accoudoir est en position relevée.

6. Siège selon la revendication 5, dans lequel les premier et troisième angles au sommet (α, γ) sont chacun compris entre 70 et 110 degrés lorsque l'accoudoir est en position rabattue et inférieur à 20 degrés lorsque l'accoudoir est en position relevée.

7. Siège selon l'une quelconque des revendications 5 et 6, dans lequel le quadrilatère formé par les quatre axes (A, B, C, D) a sensiblement la forme d'un parallélogramme.

8. Siège selon l'une quelconque des revendications précédentes, dans lequel le premier bras (4) comporte une face (4₅) qui est dirigée vers le haut lorsque l'accoudoir est en position rabattue, et un logement (7) qui débouche par une ouverture (8) dans cette face, ce logement (7) et son ouverture (8) étant conformés pour recevoir par emboîtement le deuxième bras (5) lorsque l'accoudoir est en position relevée.

9. Siège selon la revendication 8, dans lequel le deuxième bras (5) ne sort pas complètement du logement (7) lorsque l'accoudoir est en position rabattue, et ledit deuxième bras occupe alors sensiblement toute l'ouverture (8) par laquelle débouche le logement (7).

10. Siège selon l'une quelconque des revendications précédentes, dans lequel le deuxième bras comporte une extrémité avant (5₂) et délimite intérieurement une boîte de rangement (9) qui débouche par une ouverture (10) ménagée à ladite l'extrémité avant (5₂) du deuxième bras.

11. Siège selon la revendication 10, dans lequel un tiroir (11) est monté coulissant dans ladite boîte de rangement (9).

## Claims

1. Seat including a seat cushion (1), a back (2) and an arm-rest (3) mounted to pivot between a raised position and a lowered position, the arm-rest (3) being integrated with the back (2) and forming part of the said back when it is in its raised position, and the arm-rest (3) being arranged substantially horizontally resting on the seat cushion (2) when it is in its lowered position, characterised by the fact that the arm-rest includes a first and a second arm (4, 5), and a height-increasing mechanism (A-D, 6) which is controlled by the pivoting of the arm-rest and which is adapted to:
- move the two arms (4, 5) away from each other by heightening the second arm (5) relative to the first (4) when the arm rest is in the lowered position, the first arm (4) then forming the lower part of the arm-rest and resting on the seat-cushion, and the second arm (5) then forming the upper part of the arm-rest,
- and move the two arms towards each other thus decreasing the thickness of the arm-rest when the arm-rest is in the raised position.

2. Seat as described in claim 1, in which the first and second arms (4, 5) each extend longitudinally between an end termed the rear end (4₁, 5₁) and an end termed the front end (4₂, 5₂), each of the arms having a rigid frame (4₃, 5₃), the frame (4₃) of the first arm (4) including a first axis of rotation (A) which is situated towards the rear end (4₁) of the first arm and which is mounted in a fixed position relative to the rest of the seat, the frame (4₃) of the first arm also being connected to at least one rigid connecting rod (6) which is mounted to pivot about a second axis (B) firmly attached to the said frame of the first arm, the connecting rod (6) also being mounted to pivot about a third axis (C) firmly attached to the frame (5₃) of the second arm, and the frame (5₃) of the second arm also including a fourth axis of rotation (D) which is situated towards the rear end (5₁) of the second arm and which is mounted in a fixed position relative to the rest of the seat, the four axes (A-D) being horizontal and mutually parallel and being arranged distantly from each other, these axes (A-D) and the connecting rod (6) forming the height-increasing mechanism.

3. Seat as described in claim 2, in which the third and fourth axes (C, D) are separated by a distance greater than half the length (L) of the second arm (5).

4. Seat as described in claim 3, in which the third axis (C) is arranged in the vicinity of the front end (5₂) of the second arm.

5. Seat as described in any one of claims 2 to 4, in which the first, second, third and fourth axes (A-D) each form a vertex of a quadrilateral which defines a first vertex angle (α) corresponding to the first axis (A) and a third vertex angle (Υ) corresponding to the third axis (C), these first and third vertex angles (α, Υ) each being between 50 and 130 degrees when the arm-rest is in the lowered position and less than 40 degrees when the arm-rest is in the raised position.

6. Seat as described in claim 5, in which the first and third vertex angles (α, Υ) are each between 70 and 110 degrees when the arm-rest is in the lowered position and less than 20 degrees when the arm-rest is in the raised position.

7. Seat as described in either of claims 5 or 6, in which the quadrilateral formed by the four axes (A, B, C, D) has substantially the form of a parallelogram.

8. Seat as described in any one of preceding claims, in which the first arm (4) has a surface (4₅) which is directed upwardly when the arm-rest is in the lowered position, and a housing (7) which opens through an aperture (8) in this surface, this housing (7) and its aperture (8) being shaped to receive the second arm (5) by nesting when the arm-rest is in the raised position.

9. Seat as described in claim 8, in which the second arm (5) does not leave the housing (7) completely when the arm-rest is in the lowered position, and the said second arm then occupies substantially all of the aperture(8) through which the housing (7) opens.

10. Seat as described in any one of the preceding claims, in which the second arm has a front end (5₂) and defines internally a storage box (9) which opens through an aperture (10) formed at the said front end (5₂) of the second arm.

11. Seat as described in claim 10, in which a drawer (11) is mounted to slide in the said storage box (9).

## Patentansprüche

1. Sitz mit einem Sitzkissen (1), einer Rückenlehne (2) und einer Armlehne (3), die verschwenkbar zwischen einer hochgeklappten und einer heruntergeklappten Position befestigt ist, wobei die Armlehne (3), wenn sie in ihrer hochgeklappten Position ist, in die Rückenlehne (2) eingefügt ist und einen Teil derselben bildet und wobei die Armlehne (3), wenn sie in ihrer heruntergeklappten Position ist, im wesentlichen in horizontaler Auflage auf dem Sitzkissen (2) angeordnet ist, dadurch gekennzeichnet, daß die Armlehne einen ersten und einen zweiten Arm (4, 5) und einen Hebemechanismus (A-D, 6) umfaßt, der durch das Verschwenken der Armlehne gesteuert wird und geeignet ist zum:
- Entfernen der beiden Arme (4, 5) voneinander, indem der zweite Arm (5) bezüglich des ersten Arms (4) angehoben wird, wenn die Armlehne in heruntergeklappter Position ist, wobei der erste Arm (4) dann den unteren Teil der Armlehne bildet und auf dem Sitzkissen aufliegt und der zweite Arm (5) dann den oberen Teil der Armlehne bildet,
- Annähern der beiden Arme aneinander und dadurch Verringern der Dicke der Armlehne, wenn die Armlehne in hochgeklappter Position ist.

2. Sitz nach Anspruch 1, bei dem sich der erste und zweite Arm (4, 5) jeweils längs zwischen einem sogenannten hinteren Ende (4₁, 5₁) und einem sogenannten vorderen Ende (4₂, 5₂) erstrecken, wobei jeder der Arme einen starren Beschlag (4₃, 5₃) umfaßt und der Beschlag (4₃) des ersten Arms (4) eine erste Rotationsachse (A) aufweist, die im Bereich des vorderen Endes (4₁) des ersten Arms gelegen ist und in einer bezüglich dem Rest des Sitzes starren Position befestigt ist, und wobei der Beschlag (4₃) des ersten Arms weiter mit mindestens einem starren Zwischenglied (6) verbunden ist, das verschwenkbar um eine zweite, mit dem Beschlag des ersten Arms fest verbundenen Achse (B) befestigt ist, und das Zwischenglied (6) weiter verschwenkbar um eine dritte, mit dem Beschlag (5₃) des zweiten Arms fest verbundenen Achse (C) befestigt ist und wobei der Beschlag (5₃) des zweiten Arms auch eine vierte Rotationsachse (D) aufweist, die im Bereich des hinteren Endes (5₁) des zweiten Arms gelegen ist und in einer bezüglich dem Rest des Sitzes starren Position befestigt ist, und wobei die vier Achsen (A-D) zueinander horizontal und parallel und im Abstand voneinander angeordnet sind und diese Achsen (A-D) sowie das Zwischenglied (6) den Hebemechanismus bilden.

3. Sitz nach Anspruch 2, bei dem die dritte und vierte Achse (C, D) durch einen Anstand voneinander getrennt sind, der größer als die Hälfte der Lange (L) des zweiten Arms (5) ist.

4. Sitz nach Anspruch 3, bei dem die dritte Achse (C) in der Nähe des vorderen Endes (5₂) des zweiten Arms angeordnet ist.

5. Sitz nach einem der Ansprüche 2 bis 4, bei dem die erste, zweite, dritte und vierte Achse (A-D) jeweils eine Spitze eines Vierecks bilden, das einen ersten Innenwinkel (α), der zur ersten Achse (A) gehört, und einen dritten Innenwinkel (γ), der zur dritten Achse (C) gehört, festlegt, wobei der erste und dritte Innenwinkel (α, γ) jeweils zwischen 50 und 130 Grad betragen, wenn die Armlehne in heruntergeklappter Position ist, und weniger als 40 Grad betragen, wenn die Armlehne in hochgeklappter Position ist.

6. Sitz nach Anspruch 5, bei dem der erste und dritte Innenwinkel (α, γ) jeweils zwischen 70 und 110 Grad betragen, wenn die Armlehne in heruntergeklappter Position ist, und weniger als 20 Grad, wenn die Armlehne in hochgeklappter Position ist.

7. Sitz nach einem der Ansprüche 5 und 6, bei dem das durch die vier Achsen (A, B, C, D) gebildete Viereck im wesentlichen die Form eines Parallelogramms hat.

8. Sitz nach einem der vorhergehenden Ansprüche, bei dem der erste Arm (4) eine Fläche (4₅), die nach oben gerichtet ist, wenn die Armlehne in heruntergeklappter Position ist, und eine Aufnahme (7) aufweist, die über eine Öffnung (8) in diese Fläche mündet, wobei die Aufnahme (7) und ihre Öffnung (8) so ausgebildet sind, daß sie den zweiten Arm (5) durch Einschieben aufnehmen können, wenn die Armlehne in hochgeklappter Position ist.

9. Sitz nach Anspruch 8, bei dem der zweite Arm (5) die Aufnahme (7) nicht vollständig verläßt, wenn die Armlehne in heruntergeklappter Position ist, und der zweite Arm dann im wesentlichen die gesamte Öffnung (8), die in die Aufnahme (7) führt, besetzt.

10. Sitz nach einem der vorhergehenden Ansprüche, bei dem der zweite Arm ein vorderes Ende (5₂) aufweist und innen ein Aufbewahrungsfach (9) abgrenzt, zu dem eine Öffnung (10), die am vorderen Ende (5₂) des zweiten Arms ausgespart ist, führt.

11. Sitz nach Anspruch 10, bei dem ein Schubfach (11) verschiebbar in diesem Aufbewahrungsfach (9) befestigt ist.
